# FASCICULE DE BREVET EUROPEEN

(11) **EP 3 890 503 B1**
(45) Date de publication et mention de la délivrance du brevet: **01.11.2023**
(21) Numéro de dépôt: 19802234.5
(22) Date de dépôt: 26.09.2019
(51) Int. Cl.: A23G 3/28, A21C 15/00

(54) **DOUILLE MULTIPLE INTERCHANGEABLE**
MULTIRÖHRE MIT AUSWECHSELBARER ROHRLEITUNG
INTERCHANGEABLE PIPING MULTI-TUBE

(30) Priorité: 04.10.2018 FR 1801053
(43) Date de publication de la demande: 13.10.2021
(73) Titulaire: Lemercier, Michel, 33700 Merignac (FR)
(72) Inventeur: Lemercier, Michel, 33700 Merignac (FR)
(86) Numéro de dépôt international: PCT/FR2019/000149
(87) Numéro de publication internationale: WO 2020/070394

(56) Documents cités:
- WO-A1-2016/079579
- US-A- 3 664 794
- US-A- 3 878 992
- US-A- 5 114 044

## Description

### Domaine de l'invention

La présente invention concerne une douille multiple destinée aux préparations culinaires. Plus particulièrement, il s'agit d'un dispositif modulaire adaptable sur une poche à douilles, un siphon, un piston à pression ou une seringue à pâtisserie permettant une sortie simultanée, homogène, régulière et rapide d'une préparation culinaire par différents orifices dont la forme peut être choisie par l'utilisateur.

### Brève description de l'antériorité

En cuisine, une douille est un instrument de forme conique, le plus souvent adapté à une poche de toile forte, qui sert à former un ruban de crème dont on décore les compositions culinaires. Les douilles présentent différents motifs ou différentes tailles pour permettre une plus grande variété dans la décoration des compositions culinaires.

Traditionnellement, la poche à douille est prolongée d'une unique douille qui ne permet de réaliser qu'un élément de décoration à la fois et rend le travail de décoration long et chronophage. En outre, il est difficile de changer la forme de la douille tant que la poche n'est pas vidée. Et le résultat obtenu est souvent irrégulier.

Des dispositifs à douilles multiples ont été proposés, dans l'art antérieur, pour tenter de faciliter le travail des cuisiniers professionnels et amateurs.

Le brevet US1657299 décrit ainsi un dispositif constitué d'un contenant pour pâte alimentaire dont la partie inférieure est annulaire et sur laquelle est maintenu un deuxième élément annulaire détachable, comportant des pattes s'étendant vers le bas, associé à un disque comprenant une pluralité d'ouvertures pour le passage de la pâte alimentaire, le disque se fixant sur les pattes de l'élément annulaire. L'inconvénient de ce dispositif est d'une part qu'il ne s'adapte pas à toutes les poches à douilles et d'autre part qu'il ne permet pas de changer facilement le disque comportant les orifices de sortie de la pâte tant que le contenant de ladite pâte n'est pas vide.

Le brevet US3664794 est un dispositif de décoration permettant la réalisation d'une pluralité de rubans de crème en une seule pression, caractérisé en ce qu'il comprend un élément comportant une pluralité d'ouvertures circulaires dans lesquelles se positionnent des douilles à la forme souhaitée, l'élément d'accueil des douilles se verrouillant ensuite sur un moyen de fixation qui se positionne sur une poche à douilles. Mais ce dispositif qui nécessite la mise en place de mono-douilles dans un élément d'accueil manque de praticité tant dans son usage que dans son entretien. Le brevet US 3878992 décrit un autre dispositif de décoration avec une pluralité de douilles.

D'une manière générale, les dispositifs existants ont pour inconvénient de ne pas proposer une mise en oeuvre pratique et facilement modulable d'un dispositif multi-douille permettant un travail aussi rapide et précis que créatif.

### Sommaire de l'invention

La présente invention a pour but de remédier à tous les inconvénients de l'art antérieur en proposant un dispositif multidouille interchangeable.

Il s'agit d'un dispositif pour la réalisation de décoration alimentaire associé à un contenant d'une préparation alimentaire, le dispositif étant constitué de l'association réversible d'au moins trois éléments :
- un embout de raccordement au contenant ;
- un support constitué de l'association réversible d'au moins une partie haute et d'au moins une partie basse, la partie haute se fixant à l'embout de raccordement ;
- un plateau à douilles comportant au moins deux douilles, ledit plateau à douilles étant enserré entre le support partie haute et le support partie basse.

Selon un mode selon l'invention, le plateau à douilles est constitué d'une plaque comportant au moins deux orifices, une douille étant fixée sur chacun desdits orifices, ladite douille comportant une paroi délimitée par une ouverture d'entrée correspondant à l'orifice et une ouverture de sortie de la préparation alimentaire.

Préférentiellement, au moins une douille comporte un moyen de rétrécissement de son ouverture d'entrée.

Selon une variante, les douilles du plateau à douilles ont des dimensions différentes.

Selon l'invention, les orifices du plateau à douille ont des dimensions différentes.

De manière avantageuse, la partie basse du support comporte une ouverture comprenant un épaulement constituant un moyen de maintien du plateau à douilles.

Selon une autre mode de réalisation, la partie basse du support comporte au moins un moyen d'immobilisation du plateau à douilles.

Avantageusement, le moyen d'immobilisation est un ergot.

De manière préférentielle, le plateau à douilles comporte au moins un moyen d'immobilisation complémentaire.

Selon une autre variante, le moyen d'immobilisation complémentaire est une encoche se positionnant autour de l'ergot de la partie basse du support.

Selon un mode avantageux de réalisation, la partie haute du support comprend un moyen d'association réversible à la partie basse du support et la partie basse du support comprend un moyen complémentaire d'association réversible à la partie haute du support.

Préférentiellement, l'embout de raccordement comprend un moyen d'association réversible à la partie haute du support et la partie haute du support comprend un moyen complémentaire d'association à l'embout de raccordement.

Selon un variante alternative de réalisation, l'embout de raccordement comprend un moyen d'association au contenant de la préparation alimentaire.

### Brève description des dessins

Dans cette description, on se réfère aux dessins suivants:
- Figure 1 : vue en perspective du dispositif associé à une poche;
- Figure 2 : vue en perspective du dispositif éclaté;
- Figure 3 : vue latérale du dispositif éclaté ;
- Figure 4 : vue de dessus du plateau multidouille ;
- Figure 5 : vue de dessous du plateau multidouille ;
- Figure 6 : vue en perspective d'une variante de réalisation ;
- Figure 7 : vue éclatée d'une variante de réalisation ;
- Figure 8 : vue d'une variante de réalisation associée à un siphon.

### Description détaillée des modes préférés de réalisation

Selon un mode préféré de réalisation, le dispositif (1) selon l'invention est constitué d'un embout de raccordement (10) sur lequel est fixé un support (30) constitué d'une partie haute (20) et d'une partie basse (50), ces deux parties enserrant un plateau multidouille (40).

Lors de son utilisation, le dispositif (1) selon l'invention est associé à un contenant (G) de préparation alimentaire (H) pâteuse, crémeuse, mousseuse, etc. Selon un mode préféré de réalisation, le contenant (G) de préparation alimentaire (H) est une poche alimentaire utilisée classiquement en cuisine, ouverte sur l'une de ses extrémités et comportant un orifice étroit sur l'autre extrémité dans lequel va s'insérer le dispositif (1).

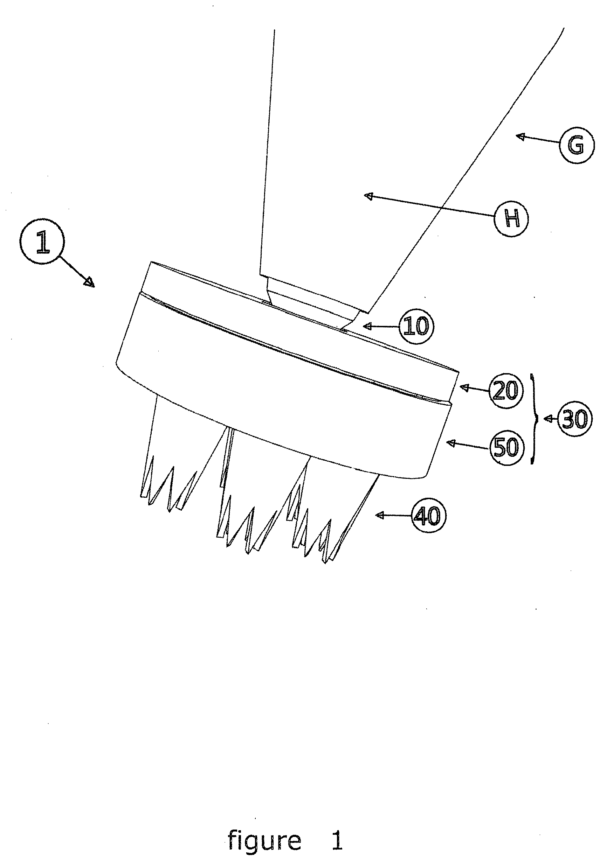

Afin de simplifier la compréhension de l'invention, le dispositif (1) sera décrit dans sa position d'utilisation, comme représenté sur la figure 1. Par rapport à un plan de travail ou à un plat contenant un aliment à garnir ou à décorer, le dispositif s'étend selon un axe sensiblement vertical, l'embout de raccordement (10) étant situé au dessus du support partie haute (20), luimême étant situé au dessus du support partie basse (50). Il est convenu, pour les besoins de la présente description, que la partie supérieure des éléments du dispositif (1) désigne la partie orientée vers l'embout de raccordement (10) et la partie inférieure des éléments du dispositif (1) désigne la partie orientée vers le support partie basse (50).

L'embout de raccordement (10) est de forme conique. Sa paroi (13) est délimitée par une ouverture supérieure (12) et une ouverture inférieure (11), lesdites ouvertures étant circulaires. L'ouverture supérieure (12) a un diamètre supérieur à l'ouverture inférieure (11). Sur son ouverture inférieure (11), l'embout de raccordement comprend un filetage extérieur (14).

L'embout de raccordement (10) permet la liaison du dispositif (1) avec la poche (G) : l'utilisateur glisse l'embout (10) à l'intérieur de la poche (G), laquelle comporte un orifice dont le diamètre est sensiblement supérieur à celui de l'ouverture inférieure (11) de l'embout de raccordement (10). L'embout (10) va ainsi se coincer dans l'orifice de la poche (G), la largeur de la partie supérieure de l'embout (10) bloquant celui-ci à l'intérieur de la poche (G).

Le support partie haute (20) a une forme de disque circulaire. Il comporte un orifice central (21) dont les parois intérieures sont taraudées. Ce taraudage (22) est complémentaire du filetage (14) présent sur l'extrémité inférieure de l'embout de raccordement (10) et permet de fixer le support partie haute (20) à l'embout de raccordement (10) par vissage.

Sur sa partie supérieure, la paroi latérale dudit support est lisse (23). Sur sa partie inférieure, ladite paroi latérale comporte un moyen d'association (24) avec le support partie basse (50). Selon un mode préféré de réalisation, le moyen d'association est un filetage (24).

Le support partie basse (50) est un anneau d'un diamètre identique au diamètre du support partie haute (20) et d'une épaisseur sensiblement supérieure à la profondeur de la partie filetée (24) du support partie haute (20).

La paroi latérale (51) du support partie basse est délimitée par une ouverture supérieure (52) et une ouverture inférieure (53). L'ouverture inférieure comporte un épaulement (54) s'étendant vers l'intérieur dudit support, ledit épaulement (54) étant destiné à servir de moyen de maintien du plateau multidouille (40). Le diamètre de l'ouverture inférieure (53) du support partie basse (50) est donc inférieur au diamètre de l'ouverture supérieure (52).

A l'intérieur du support partie basse (50), à l'intersection entre sa paroi latérale (51) et l'épaulement (54) sont positionnés deux ergots (56) destinés au maintien du plateau multidouille (40) et constituant un moyen d'immobilisation de ce dernier. Selon un mode préféré de réalisation, les ergots sont diamétralement opposés.

Sur sa paroi intérieure, le support partie basse (50) comporte un moyen d'association complémentaire (55) au moyen d'association (24) du support partie haute (20). Selon un mode préféré de réalisation, ce moyen d'association complémentaire (55) est un taraudage. Ce taraudage (52) en s'associant au filetage (24) présent sur l'extrémité inférieure du support partie haute permet de fixer le support partie haute (20) au support partie basse (50) par vissage.

Une fois associées, la paroi latérale supérieure (23) du support partie haute (20) et la paroi latérale (51) du support partie basse sont dans le même alignement.

Selon une variante de réalisation, le support (30) comporte un moyen d'accroche (30) facilitant son ouverture et sa fermeture.

Le plateau multidouille (40), ou plateau à douilles, est constitué d'une plaque circulaire (41) comportant une pluralité d'orifices (42) circulaires, une douille (43) prolongeant chacun desdits orifices.

La plaque circulaire (41) est de faible épaisseur et son diamètre correspond au diamètre intérieur du support partie basse (50). Ladite plaque (41) comporte sur sa circonférence deux encoches (44) constituant des moyens d'immobilisation complémentaires. Selon un mode préféré de réalisation, les encoches (44) sont diamétralement opposées. Lorsque le plateau multidouille (40) est inséré dans le support partie basse (50), la circonférence de la plaque circulaire (41) vient s'appuyer sur l'épaulement (54) du support partie basse (50), ce dernier bloquant le support multidouille (40) à l'intérieur du support partie basse (50). Et les encoches (44) sont emboîtées autour des ergots (56) du support partie basse (50), assurant ainsi l'immobilisation du plateau multidouille (40).

Selon une variante, les moyens d'immobilisation (56) du plateau multidouille (40) présents sur le support partie basse (50) peuvent être des encoches et les moyens d'immobilisation complémentaires (44) présents sur le plateau multidouille (40) peuvent être des ergots.

Lorsque le plateau multidouille est positionné (40) dans le support partie basse (50), les douilles (43) ressortent par l'ouverture inférieure (53) du support partie basse.

Chacune des douilles (43) a une paroi en forme de cône dont l'ouverture supérieure (43a), ou ouverture d'entrée, est circulaire et est fixée à la plaque circulaire (41) par moulage, soudure, impression additive ou tout autre moyen de fixation. L'ouverture d'entrée (43a) a une forme et une taille identique à l'orifice (42) que prolonge la douille (43). L'ouverture inférieure (43b), ou ouverture de sortie, de la douille (43b) est moins large que l'ouverture supérieure (43a) et constitue l'orifice de sortie de la préparation alimentaire (H). La forme et la dimension de l'extrémité de sortie (43c) délimitant l'ouverture inférieure (43b) permet de modeler la forme et la dimension du cordon de préparation alimentaire (H) qui en ressort. Selon un mode préféré de réalisation, l'ouverture inférieure (43b) des douilles du dispositif (1) est circulaire et crénelée. Selon d'autres variantes de réalisation, elle peut avoir toute autre forme s'adaptant aux besoins de l'utilisateur.

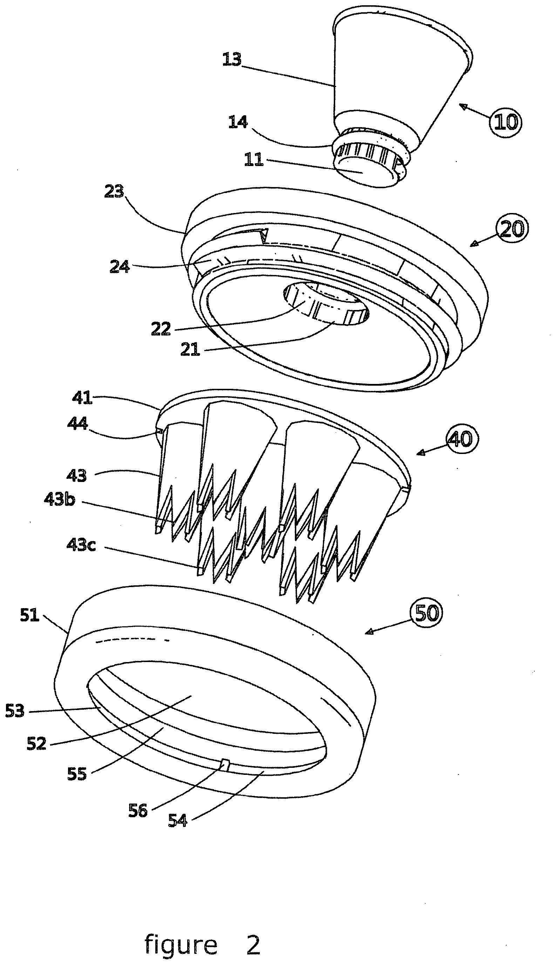

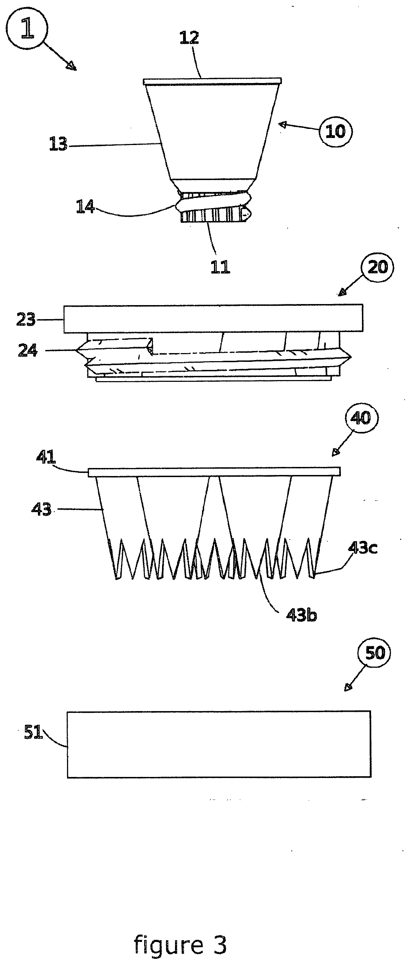

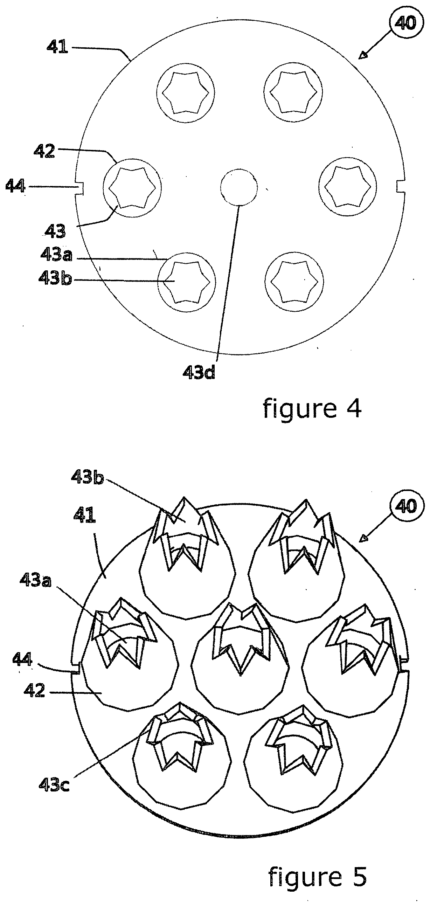

Selon un mode préféré de réalisation tel que représenté sur les figures 1 à 5, le plateau multidouille (40) comporte sept douilles (43), une douille centrale et six douilles positionnées circulairement autour de la douille centrale. Afin d'homogénéiser et de réguler le débit de la préparation alimentaire (H) au travers des douilles (43) et d'empêcher que le flux ne se concentre vers la douille centrale, l'orifice correspondant à ladite douille centrale est diminué par un épaulement (43d) constituant un moyen de rétrécissement dudit orifice (42).

Selon une variante de réalisation, le nombre de douilles (43) du plateau multidouille (40), leur forme et leur positionnement peuvent varier selon le résultat souhaité. Les épaulements (43d) sont alors adaptés et positionnés afin de permettre un écoulement homogène de la préparation alimentaire (H) à travers les différentes douilles (43).

Les douilles (43) ont des dimensions différentes, ainsi que les orifices (42).

Le fonctionnement du dispositif lorsqu'il est utilisé est le suivant : l'embout de raccordement (10) est inséré dans la poche (G) et est poussé dans l'orifice de ladite poche, dans lequel il se bloque, l'ouverture supérieure (12) de l'embout (10) étant plus large que l'orifice de la poche (G).

Le support partie haute (20) est alors vissé sur l'embout de raccordement (10).

L'utilisateur positionne ensuite le plateau multidouille (40) à l'intérieur du support partie basse (50) en faisant reposer la circonférence de la plaque circulaire (41) contre l'épaulement (54) dudit support (50) et en associant ergots (56) et encoches (44), les douilles (43) ressortant par son ouverture inférieure (53). Une fois que le plateau mutidouille (40) est ainsi positionné, le support partie basse (50) est vissé sur le support partie haute (20), le plateau multidouille (40) étant alors enserré et immobilisé entre les deux parties du support (20, 50).

L'utilisateur peut alors verser la préparation alimentaire (H) dans la poche (G), bloquer son ouverture principale et en diminuer progressivement le volume en appuyant dessus. Sous la pression, la préparation alimentaire (H) va se diriger vers le dispositif (1) qu'elle va traverser jusqu'à se répartir entre les différentes douilles (43) du plateau multidouille (40). Un ruban de préparation alimentaire (H) va sortir par l'extrémité de sortie ( 43c) de chacune des douilles.

L'utilisateur obtient ainsi une pluralité de rubans dont la sortie est homogène et dont la forme est conditionnée par la forme choisie pour l'extrémité (43c) de sortie de la douille (43).

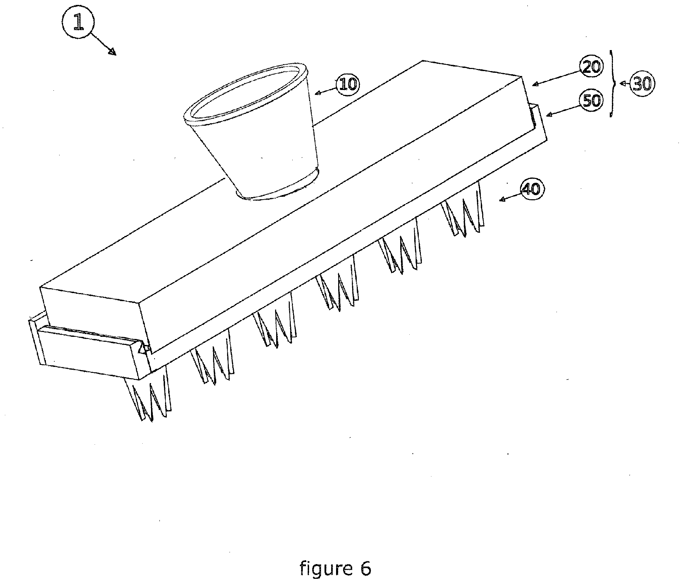

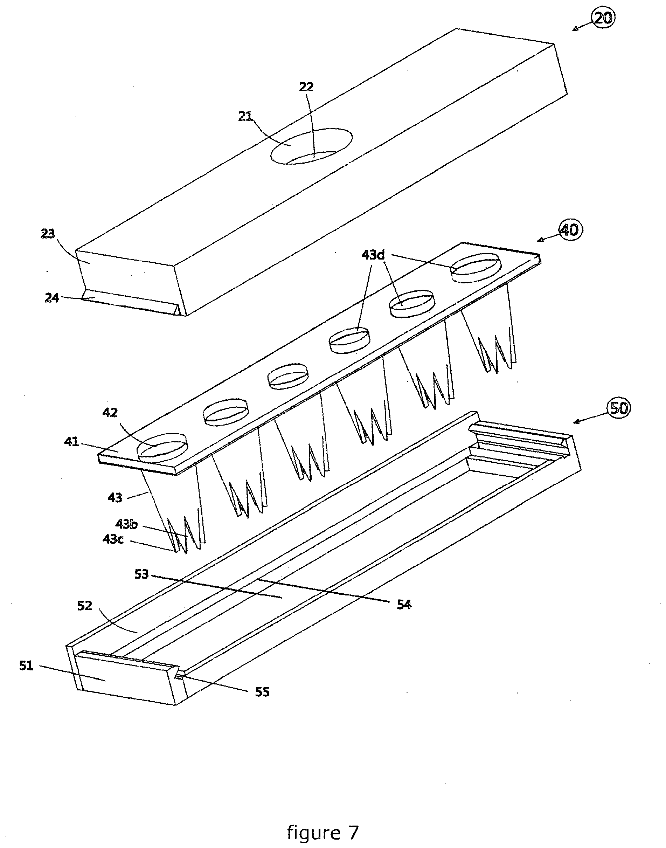

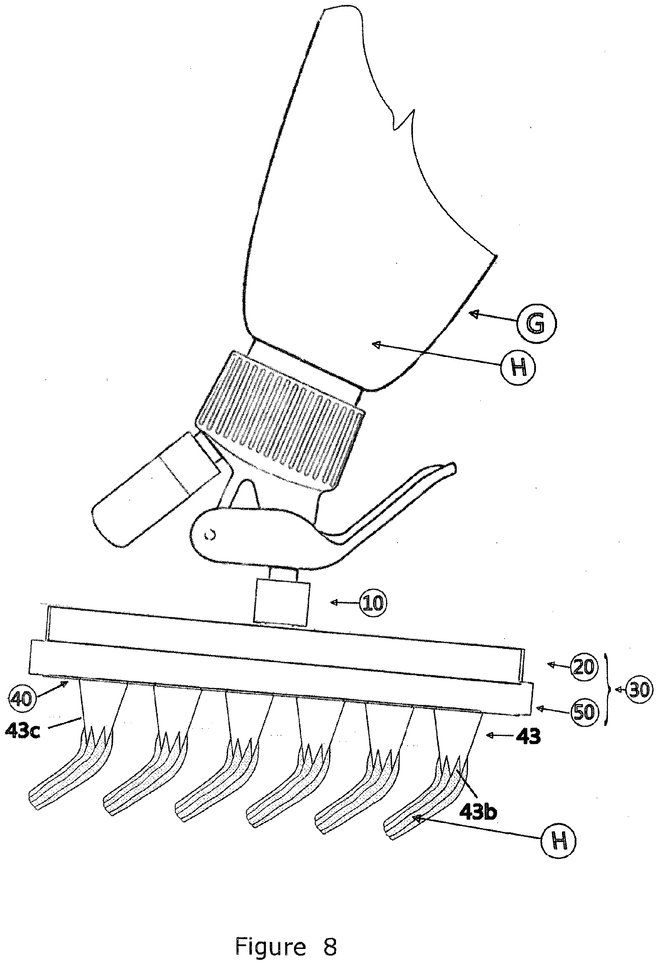

Selon une variante de réalisation telle que représentée sur les figures 6 à 8, toutes les pièces constitutives du dispositif ont une forme de parallélépipède rectangle, à l'exception de l'embout de raccordement (10) qui reste identique à celui décrit ci-avant.

Le support partie haute (20) est rectangulaire, avec un orifice central taraudé (21). Le moyen d'association (24) au support partie basse (50) est une saillie prolongeant horizontalement chacune des largeurs du support partie haute (20).

Le support partie basse (50) est également rectangulaire, ses dimensions étant sensiblement identiques à celles du support partie haute (20). Il comporte une ouverture supérieure (52) et une ouverture inférieure (53), cette dernière comprenant un épaulement (54). Le moyen d'association complémentaire (55) au support partie haute (20) est une glissière positionnée sur la paroi intérieure de chacune des largeurs du support partie basse (50): la saillie (24) de chacune des largeurs du support partie haute (20) vient glisser à l'intérieur de la glissière (55) correspondante présente sur la largeur du support partie basse (50).

La plaque (41) du plateau multidouille est également rectangulaire et se positionne sur l'épaulement (54) du support partie basse (50) avant d'être recouverte par le support partie haute (20).

Dans la forme de réalisation en parallélépipède rectangle, selon une variante, les glissières (55) et saillies (24) peuvent être positionnées sur les longueurs des supports (50, 20).

Dans d'autres modes de réalisation, le support partie haute, le plateau multidouille et le support partie basse peuvent avoir toute autre forme : carrée, triangulaire, ovale, polygone, etc.

Le moyen d'association (24) et le moyen d'association complémentaire (55) permettant une association réversible du support partie haute (20) et support partie basse (50) peuvent avoir toute autre forme adaptée à la forme générale du dispositif, tel par exemple que fixation à baïonnette, emboitage, etc.

Dans les modes de réalisation décrits ci-avant, les douilles ont une forme conique avec une extrémité crénelée. Selon d'autres variantes de réalisation, elles peuvent avoir tout autre forme.

La section, le nombre et l'emplacement des douilles peuvent indéfiniment varier pour répondre aux besoins de l'utilisateur.

Lorsque la préparation alimentaire (H) n'est pas entièrement utilisée, l'ensemble constitué des deux parties du support (20, 50) et du plateau multidouille (40) peut également être enlevé de l'embout de raccordement (10) par dévissage et un bouchon taraudé dont le diamètre est adapté au diamètre de l'ouverture inférieure de l'embout de raccordement (10) peut être vissé sur ce dernier.

Selon un mode de réalisation alternatif, l'embout de raccordement comporte un taraudage intérieur du côté de son ouverture supérieure (12). Ledit taraudage permet de raccorder le dispositif, par vissage, à d'autres types de contenants alimentaires (G) comportant une extrémité filetée. Ce mode de raccordement convient notamment aux siphons, pistons à pression, seringues à pâtisserie, etc.

De nombreuses variantes éventuellement susceptibles de se combiner peuvent ici être apportées sans jamais sortir du cadre de l'invention tel qu'il est défini dans les revendications.

## Revendications

1. Dispositif (1) pour la réalisation de décoration alimentaire associé à un contenant (G) d'une préparation alimentaire (H), ladite préparation alimentaire (H) étant distribuée par ledit dispositif, **caractérisé en ce que** le dispositif (1) est constitué de l'association réversible d'au moins trois éléments :
- au moins un embout de raccordement (10) audit contenant (G);
- au moins un support (30) constitué de l'association réversible d'au moins une partie haute (20) et d'au moins une partie basse (50), la partie haute (20) se fixant à l'embout de raccordement (10),
- au moins un plateau à douilles (40) comportant au moins
deux douilles, le plateau à douilles (40) étant constitué d'une plaque (41) comportant au moins deux orifices (42), une douille (43) étant fixée sur chacun desdits orifices (42), ladite douille (43) comportant une paroi délimitée par une ouverture d'entrée (43a) correspondant à l'orifice (42) et une ouverture de sortie (43b) de la préparation alimentaire (H), ledit plateau à douilles (40) étant enserré entre le support partie haute (20) et le support partie basse (50) et au moins un desdits orifices (42) du plateau à douilles (40) ayant des dimensions différentes d'au moins un autre desdits orifices (42).

2. Dispositif (1) de décoration alimentaire selon la revendication 1 **caractérisé en ce qu'**au moins une douille (43) comporte un moyen de rétrécissement (43d) de son ouverture d'entrée (43a).

3. Dispositif (1) de décoration alimentaire selon l'une des revendications précédentes **caractérisé en ce qu'**au moins une desdites douilles (43) du plateau à douilles (40) a des dimensions différentes d'au moins une autre desdites douilles (43).

4. Dispositif (1) de décoration alimentaire selon l'une des revendications précédentes **caractérisé en ce que** la partie basse du support (50) comporte une ouverture (53) comprenant un épaulement (54) constituant un moyen de maintien du plateau à douilles (40).

5. Dispositif (1) de décoration alimentaire selon l'une des revendications précédentes **caractérisé en ce que** la partie basse du support (50) comporte au moins un moyen d'immobilisation (56) du plateau à douilles (40).

6. Dispositif (1) de décoration alimentaire selon la revendication 5 **caractérisé en ce que** le moyen d'immobilisation (56) est un ergot.

7. Dispositif (1) de décoration alimentaire selon les revendications 5 et 6 **caractérisé en ce que** le plateau à douilles (40) comporte au moins un moyen d'immobilisation complémentaire (44).

8. Dispositif (1) de décoration alimentaire selon la revendication 7 **caractérisé en ce que** le moyen d'immobilisation complémentaire (44) est une encoche se positionnant autour de l'ergot (56) de la partie basse du support (50).

9. Dispositif (1) de décoration alimentaire selon l'une des revendications précédentes **caractérisé en ce que** la partie haute du support (20) comprend un moyen d'association (24) réversible à la partie basse du support (50) et la partie basse du support (50) comprend un moyen complémentaire (55) d'association réversible à la partie haute du support (20).

10. Dispositif (1) de décoration alimentaire selon l'une des revendications précédentes **caractérisé en ce que** l'embout de raccordement (10) comprend un moyen d'association (14) réversible à la partie haute du support (20) et la partie haute du support (20) comprend un moyen complémentaire (22) d'association à l'embout de raccordement (10).

11. Dispositif (1) de décoration alimentaire selon l'une des revendications précédentes **caractérisé en ce que** l'embout de raccordement (10) comprend un moyen d'association au contenant (G) de la préparation alimentaire (H).

## Patentansprüche

1. Vorrichtung (1) für die Realisierung einer Lebensmitteldekoration, die einem Behälter (G) einer Lebensmittelzubereitung (H) zugeordnet ist, wobei die Lebensmittelzubereitung (H) von der Vorrichtung ausgegeben wird, **dadurch gekennzeichnet, dass** die Vorrichtung (1) aus dem besteht reversible Assoziation von mindestens drei Elementen:
- Mindestens ein Anschlussendstück (10) zum Behälter (G);
- Mindestens eine Stütze (30), bestehend aus der reversiblen Kombination von mindestens einem Oberteil (20) und mindestens einem Unterteil (50), wobei das Oberteil (20) Anschluss an die an der Anschlussendstück (10);
- Mindestens eine Multi-Düse platte (40) mit mindestens zwei Düsen, wobei die Multi-Düse platte (40) aus einer Platte (41) mit mindestens zwei Öffnungen (42) an deren je eine Düse (43) befestigt ist, diese Düse (43) bestehend aus einer Wand jene die durch eine Einlassöffnung (43a) die der Öffnung (42) entspricht, und eine Auslassöffnung (43b) der Lebensmittelzubereitung (H) begrenzt ist, wobei die Multi-Düse platte (40) zwischen dem oberen Teil und dem unteren Teil des Trägers (50) eingeklemmt ist, und mindestens eine der Öffnungen (42) der Multi-Düse Platte (40) mit eine andere Abmessungen der Öffnungen (42) aufweist.

2. Vorrichtung (1) zur Lebensmitteldekoration nach Anspruch 1, **dadurch gekennzeichnet, dass** mindestens eine Düsen (43) eine Verkleinerung (43d) ihrer Einlassöffnung (43a) aufweist.

3. Vorrichtung (1) für die Lebensmitteldekoration gemäß einer der vorherigen Behauptungen, die darin gekennzeichnet sind, dass mindestens einer der genannten Düsen (43) der Multi-Düse platte (40) hat unterschiedliche Dimensionen anderen andere Düsen(43).

4. Vorrichtung (1) zur Lebensmitteldekoration nach einem der vorhergehenden Ansprüche, **dadurch gekennzeichnet, dass** der untere Teil des Trägers (50) eine Öffnung (53) aufweist, die eine Schulter (54) aufweist, die eine Einrichtung zum Halten der Multi Düse platte (40).

5. Vorrichtung (1) zur Lebensmitteldekoration nach einem der vorhergehenden Ansprüche, **dadurch gekennzeichnet, dass** der untere Teil des Trägers (50) mindestens eine Immobilisierung (56) der Multi-Düse platte (40) aufweist.

6. Vorrichtung (1) zur Lebensmitteldekoration nach Anspruch 5, **dadurch gekennzeichnet**, Mittel zur Ruhigstellung (56) ist ein Spornen.

7. Vorrichtung (1) zur Lebensmitteldekoration nach den Ansprüchen 5 und 6, **dadurch gekennzeichnet**, Multi-Düse platte (40) mindestens eine zusätzliche Immobilisierung (44) aufweist.

8. Vorrichtung (1) zur Lebensmitteldekoration nach Anspruch 7, **dadurch gekennzeichnet, dass** die zusätzliche Immobilisierung (44) eine Kerbe ist, die um einen Sporn (56) des unteren Teils des Trägers (50) angeordnet ist.

9. Vorrichtung (1) zur Lebensmitteldekoration nach einem der vorhergehenden Ansprüche, **dadurch gekennzeichnet, dass** der obere Teil des Trägers (20) ein reversibles mittel der Assoziation (24) zum unteren Teil des Trägers (50), und untere Teil des Trägers (50) beinhaltet ein Assoziationsmittel (55) eine reversible der obere Teil des Trägers (20).

10. Vorrichtung (1) zur Lebensmitteldekoration nach einem der vorhergehenden Ansprüche, **dadurch gekennzeichnet, dass** die Anschlussendstück (10) ein reversibles Kombinationsmittel (14) zum oberen Teil des Trägers (20) und der obere Teil des Trägers (20) ein zusätzliches Mittel (22) zum Verbinden mit der Anschlussendstück (10) aufweist.

11. Vorrichtung (1) zur Lebensmitteldekoration nach einem der vorhergehenden Ansprüche, **dadurch gekennzeichnet, dass** das Anschlussendstück (10) Mittel zur Verbindung mit dem Behälter (G) der Lebensmittelzubereitung (H) aufweist.

## Claims

1. Device (1) for producing food decoration associated with a container (G) of a food preparation (H), said food preparation (H) being dispensed by said device, **characterized in that** the device (1) is made up of the reversible association of at least three elements:
- at least one connection endpiece (10) to said container (G);
- at least one support (30) consisting of the reversible combination of at least one upper part (20) and at least one lower part (50), the upper part (20) being fixed to the connection endpiece ( 10),
- at least one multidecorating tip plate (40) comprising at least two decorating tips, the multidecorating tip plate (40) consisting of a plate (41) comprising at least two orifices (42), a decorating tip (43) being fixed to each of the said orifices (42), the said decorating tip (43) comprising a wall delimited by an inlet opening (43a) corresponding to the orifice (42) and an outlet opening (43b) of the food preparation (H), said multidecorating tip plate (40) being clamped between the upper part support ( 20) and the lower part support (50) and at least one of said orifices (42) of the multidecorating tip plate (40) having different dimensions from at least one other of said orifices (42).

2. Dev,ice_(1) for food decoration according to claim 1 **characterized in that** at least one decorating tip (43) comprises a narrowing means (43d) of its inlet opening (43a).

3. Device (1) for food decoration according to one of the preceding claims, **characterized in that** at least one of said decorating tip (43) of the multidecorating tip plate (40) has different dimensions from at least one other of said decorating tip (43 ).

4. Device (1) for food decoration according to one of the preceding claims, **characterized in that** the lower part of the support (50) has an opening (53) comprising a shoulder (54) constituting a means for holding the multidecorating tip plate ( 40).

5. Device (1) for food decoration according to one of the preceding claims, **characterized in that** the lower part of the support (50) comprises at least one immobilizing means (56) of the multidecorating tip plate (40).

6. Device (1) for food decoration according to claim 5 **characterized in that** the immobilizing means (56) is a lug.

7. Device (1) for food decoration according to claims 5 and 6 **characterized in that** the multidecorating tip plate (40) comprises at least one complementary immobilization means (44).

8. Device (1) for food decoration according to claim 7 **characterized in that** the additional immobilizing means (44) is a notch positioned around the lug (56) of the lower part of the support (50).

9. Device (1) for food decoration according to one of the preceding claims, **characterized in that** the upper part of the support (20) comprises a means of association (24) reversible to the lower part of the support (50) and the part bottom of the support (50) comprises complementary means (55) of reversible association with the upper part of the support (20).

10. Device (1) for food decoration according to one of the preceding claims, **characterized in that** the connection endpiece (10) comprises a means of association (14) reversible to the upper part of the support (20) and the part top of the support (20) comprises complementary means (22) for association with the connection endpiece (10).

11. Device (1) for food decoration according to one of the preceding claims, **characterized in that** the connection endpiece (10) comprises means for association with the container (G) of the food preparation (H).
